# EUROPEAN PATENT APPLICATION

(11) **EP 3 703 310 A1**
(43) Date of publication of application: **02.09.2020**
(21) Application number: 18869644.7
(22) Date of filing: 11.09.2018
(51) Int. Cl.: H04L 9/32, G06F 21/44, H04W 12/06

(54) **INFORMATION PROCESSING DEVICE, INFORMATION PROCESSING SYSTEM, AND PROGRAM**

(30) Priority: 27.10.2017 JP 2017208328
(71) Applicant: Sony Corporation, Tokyo 108-0075 (JP)
(72) Inventor: KAMINO, Itsuki, Tokyo 108-0075 (JP); SAKABA, Koji, Tokyo 108-0075 (JP); NAKATSURU, Tsutomu, Tokyo 108-0075 (JP); SUZUKI, Yuki, Tokyo 108-0075 (JP)
(74) Representative: D Young & Co LLP
(86) International application number: PCT/JP2018/033660
(87) International publication number: WO 2019/082530

(57) **Abstract**

It is desirable to provide a technology that enables authentication even in a terminal not capable of RF communication.

Provided is an information processing device including: a code generation unit that generates a code in which part of information necessary for authentication and identification information are embedded; a display control unit that controls display of the code; and an authentication unit that performs a rest of the authentication by using a connection established, after part of the authentication is performed on the basis of the part of the information necessary for the authentication and the connection based on the identification information included in the code is established.

## Description

### TECHNICAL FIELD

The present disclosure relates to an information processing device, an information processing system, and a program.

### BACKGROUND ART

In recent years, an RF communication function such as a communication function using Near Field Communication (NFC) is sometimes used for communication with a reader/writer in read processing or write processing for a non-contact IC card. However, depending on regions, there is an actual situation in which many mobile terminals are sold not having the RF communication function (for example, a terminal not having a ContactLess Frontend (CLF) chip). Such a situation can be a hindrance to an improvement in the installation rate of a non-contact IC card function to mobile terminals.

On the other hand, as an alternative to communication using the RF communication function, it is assumed that communication between the non-contact IC card and the reader/writer is performed on a P2P communication path generated by connection establishment using a two-dimensional code. For example, a technology is disclosed for exchanging information necessary for connection between devices with a barcode (for example, see Patent Document 1). Furthermore, a technology is disclosed for implementing settlement by wireless communication by exchanging image information in which address information is embedded (see, for example, Patent Document 2).

### CITATION LIST

### PATENT DOCUMENT

Patent Document 1: Japanese Patent Application Laid-Open No. 2002-063652
Patent Document 2: Japanese Patent Application Laid-Open No. 2002-251653

### SUMMARY OF THE INVENTION

### PROBLEMS TO BE SOLVED BY THE INVENTION

As described above, there are also mobile terminals not having the RF communication function (for example, terminals not having the CLF chip). In such a terminal, RF communication is impossible. Thus, it is desirable to provide a technology that enables authentication even in a terminal not capable of the RF communication.

### SOLUTIONS TO PROBLEMS

According to the present disclosure, an information processing device is provided including: a code generation unit that generates a code in which part of information necessary for authentication and identification information are embedded; a display control unit that controls display of the code; and an authentication unit that performs a rest of the authentication by using a connection established, after part of the authentication is performed on the basis of the part of the information necessary for the authentication and the connection based on the identification information included in the code is established.

According to the present disclosure, an information processing system is provided including: a first information processing device including a code generation unit that generates a code in which part of information necessary for authentication and identification information are embedded, a display control unit that controls display of the code, and an authentication unit that performs a rest of the authentication by using a connection established, after part of the authentication is performed on the basis of the part of the information necessary for the authentication and the connection based on the identification information included in the code is established; and a second information processing device including a code acquisition unit that acquires the code, and an authentication processing unit that performs part of the authentication on the basis of the part of the information necessary for the authentication.

According to the present disclosure, a program is provided that causes a computer to function as an information processing system including: a code generation unit that generates a code in which part of information necessary for authentication and identification information are embedded; a display control unit that controls display of the code; an authentication unit that performs a rest of the authentication by using a connection established, after part of the authentication is performed on the basis of the part of the information necessary for the authentication and the connection based on the identification information included in the code is established; a code acquisition unit that acquires the code; and an authentication processing unit that performs part of the authentication on the basis of the part of the information necessary for the authentication.

### EFFECTS OF THE INVENTION

As described above, according to the present disclosure, a technology is provided that can advance the timing of communication start after connection establishment. Note that, the above-described effect is not necessarily limited, and, in addition to the above-described effect, or in place of the above-described effect, any of effects described in the present specification, or other effects that can be grasped from the present specification may be exhibited.

### BRIEF DESCRIPTION OF DRAWINGS

Fig. 1 is a diagram illustrating a configuration example of an information processing system according to an embodiment of the present disclosure.
Fig. 2 is a block diagram illustrating a hardware configuration example of a mobile terminal according to the present embodiment.
Fig. 3 is a diagram illustrating a functional configuration example of the mobile terminal according to the embodiment of the present disclosure.
Fig. 4 is a block diagram illustrating a hardware configuration example of a reader/writer according to the present embodiment.
Fig. 5 is a diagram illustrating a functional configuration example of the reader/writer according to the embodiment of the present disclosure.
Fig. 6 is a flowchart illustrating a flow of connection processing and authentication processing in a case where P2P connection information is embedded in a code.
Fig. 7 is a flowchart illustrating a flow of connection processing and authentication processing according to the present embodiment.
Fig. 8 is a flowchart illustrating details of the connection processing and the authentication processing according to the present embodiment.
Fig. 9 is a flowchart illustrating details of the connection processing and the authentication processing according to the present embodiment.
Fig. 10 is a flowchart illustrating details of the connection processing and the authentication processing according to the present embodiment.

### MODE FOR CARRYING OUT THE INVENTION

Preferred embodiments of the present disclosure will be described in detail below with reference to the accompanying drawings. Note that, in the present specification and the drawings, constituents having substantially the same functional configuration are denoted by the same reference signs, and redundant explanations will be omitted.

Furthermore, in the present specification and drawings, a plurality of constituents having substantially the same or similar functional configuration may be distinguished by attaching different numerals after the same reference numerals. However, in a case where it is not necessary to distinguish each of the plurality of constituents having substantially the same or similar functional configuration, only the same reference numerals will be given. Furthermore, similar constituents in different embodiments may be distinguished by attaching different alphabets after the same reference numerals. However, in a case where it is not necessary to distinguish each of the similar constituents, only the same reference numerals are given.

Note that, the description will be made in the following order.
1. Details of embodiment
   1.1. System configuration example
   1.2. Hardware configuration example of mobile terminal
   1.3. Functional configuration example of mobile terminal
   1.4. Hardware configuration example of reader/writer
   1.5. Functional configuration example of reader/writer
   1.6. General connection processing and authentication processing
   1.7. Connection processing and authentication processing according to present embodiment
   1.8. Details of connection processing and authentication processing
2. Conclusion

### <1. Details of embodiment>

Hereinafter, details will be described of an embodiment of the present disclosure.

### [1.1. System configuration example]

First, a configuration example will be described of an information processing system according to the embodiment of the present disclosure.

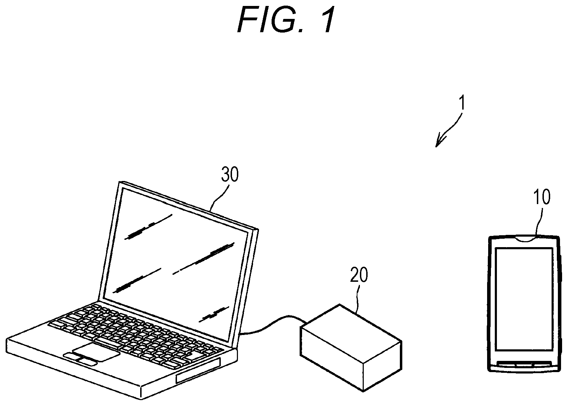

Fig. 1 is a diagram illustrating the configuration example of the information processing system according to the embodiment of the present disclosure. In the example illustrated in Fig. 1, an information processing system 1 includes a first information processing device (hereinafter also referred to as "mobile terminal") 10, a second information processing device (hereinafter also referred to as "reader/writer") 20, and a third information processing device 30.

The mobile terminal 10 includes an IC chip described later. The IC chip includes a memory area described later. Prior to access to such a memory area, authentication needs to be performed. The mobile terminal 10 and the reader/writer 20 can perform non-contact communication (P2P wireless communication). Examples of P2P wireless communication include communication using Bluetooth (registered trademark), communication using Wi-Fi (registered trademark), and the like. The third information processing device 30 provides a service that uses the memory area of the IC chip by non-contact communication.

### [1.2. Hardware configuration example of mobile terminal]

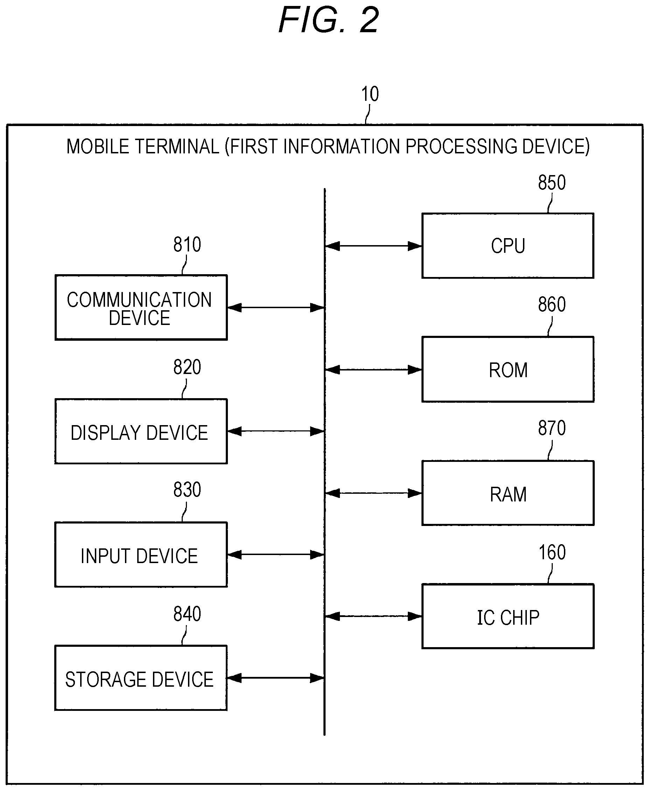

Subsequently, a hardware configuration example will be described of the mobile terminal 10 according to the embodiment of the present disclosure. Fig. 2 is a block diagram illustrating the hardware configuration example of the mobile terminal 10 according to the present embodiment.

In the example illustrated in Fig. 2, the mobile terminal 10 includes a communication device 810, a display device 820, an input device 830, a storage device 840, a Central Processing Unit (CPU) 850, a Read Only Memory (ROM) 860, a Random Access Memory (RAM) 870, and an IC chip 160. Furthermore, the mobile terminal 10 also includes a bus, a bridge, an interface, and the like in addition to those illustrated in Fig. 2.

The CPU 850 functions as, for example, an arithmetic processing device or a control device, and controls all or part of operations of each constituent on the basis of various programs recorded on the storage device 840, the ROM 860, the RAM 870, or a removable recording medium (not illustrated).

The ROM 860 stores, for example, a program read by the CPU 850, data used for calculation, and the like. The RAM 870 temporarily or permanently stores, for example, a program read by the CPU 850 and various parameters and the like that change as appropriate when the program is executed.

The storage device 840 is a device for storing various data, and includes, for example, a magnetic storage device such as a hard disk drive (HDD), a semiconductor storage device, an optical storage device, a magneto-optical storage device, or the like.

The communication device 810 transmits and receives radio waves wirelessly to and from the reader/writer 20, for example.

The display device 820 is a display device, for example, a Liquid Crystal Display (LCD), an Electro-Luminescence Display (ELD), or the like.

The input device 830 mainly includes a microphone and input keys. The microphone is a device for inputting voice mainly. The microphone is used for a call, for example. The input keys are a numeric keypad, a power key, a call key, and the like. The input keys are used for inputting a telephone number of a call partner and creating an e-mail, for example. Furthermore, the input device may be a remote control means (so-called remote controller) capable of transmitting a control signal using infrared rays or other radio waves. Note that, the input device 830 includes an input control circuit for transmitting information input by using operation means described above to the CPU 850 as an input signal, and the like.

The IC chip 160 mainly includes a CPU (not illustrated), a ROM (not illustrated), a RAM (not illustrated), a storage device (not illustrated), and a non-contact communication device (not illustrated). The CPU (not illustrated) functions as an arithmetic processing device or a control device on the basis of various programs recorded on, for example, the ROM (not illustrated), the RAM (not illustrated), and the storage device (not illustrated). In the present embodiment, the mobile terminal 10 is a mobile phone that can perform non-contact communication, and the CPU (not illustrated) mainly controls part or all of operation of the non-contact communication device (not illustrated).

The ROM (not illustrated) stores, for example, a program read by the CPU (not illustrated), data used for calculation, and the like. The RAM (not illustrated) temporarily or permanently stores, for example, a program read by the CPU (not illustrated) and various parameters and the like that change as appropriate when the program is executed.

In the above, the hardware configuration example has been described of the mobile terminal according to the embodiment of the present disclosure.

### [1.3. Functional configuration example of mobile terminal]

Subsequently, a functional configuration example will be described of the mobile terminal 10.

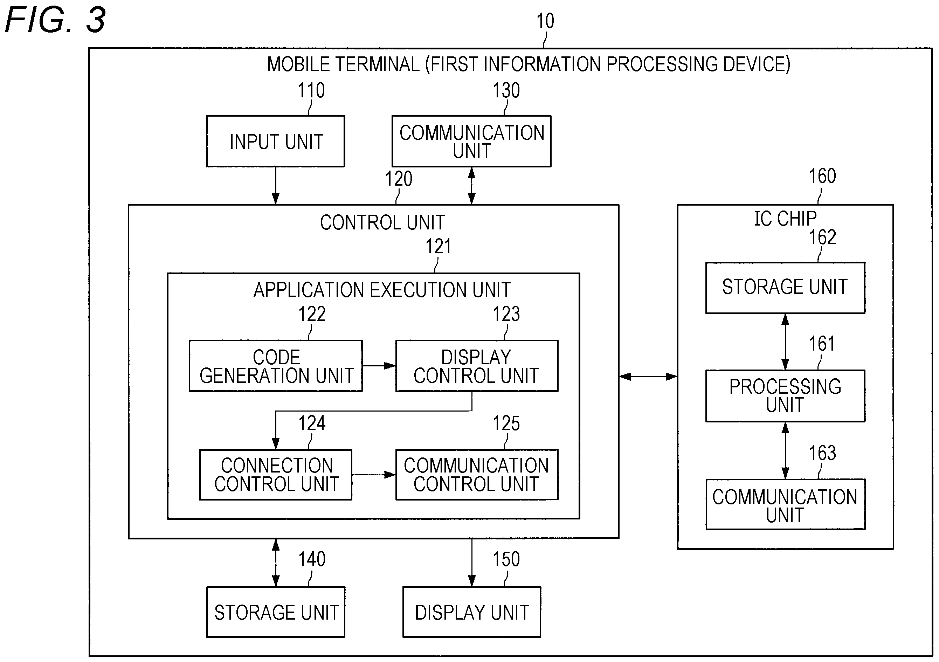

Fig. 3 is a diagram illustrating the functional configuration example of the mobile terminal 10 according to the embodiment of the present disclosure. As illustrated in Fig. 3, the mobile terminal 10 includes an input unit 110, a control unit 120, a communication unit 130, a storage unit 140, a display unit 150, and an IC chip 160. Hereinafter, descriptions will be given of these functional blocks included in the mobile terminal 10.

The input unit 110 has a function of accepting an operation input by a user. In the embodiment of the present disclosure, a case is mainly assumed where the input unit 110 includes a touch panel. However, the input unit 110 may include a button, a mouse, a keyboard, a switch, a lever, or the like. Furthermore, the input unit 110 may include a microphone that detects the user's voice.

The control unit 120 may include, for example, a processing device such as one or a plurality of Central Processing Units (CPUs). In a case where these blocks include a processing device such as a CPU, such a processing device may include an electronic circuit. The control unit 120 can be implemented by executing a program by such a processing device. The control unit 120 includes an application execution unit 121, and the application execution unit 121 includes a code generation unit 122, a display control unit 123, a connection control unit 124, and a communication control unit 125. Functions of these units will be described later.

The communication unit 130 includes a communication circuit and has a function of communicating with another device. For example, in a case where a connection with the reader/writer 20 is established, the communication unit 130 performs P2P wireless communication with the reader/writer 20 by using a communication path with which the connection is established. As described above, examples of P2P wireless communication include communication using Bluetooth (registered trademark), communication using Wi-Fi (registered trademark), and the like. For example, the communication unit 130 includes a communication interface.

The storage unit 140 includes a memory, and is a recording medium that stores a program executed by the control unit 120 and stores data necessary for executing the program. Furthermore, the storage unit 140 temporarily stores data for calculation by the control unit 120. For example, the storage unit 140 includes a magnetic storage device, a semiconductor storage device, an optical storage device, or a magneto-optical storage device.

The display unit 150 outputs various types of information. For example, the display unit 150 may include a display capable of performing display visible to the user. At this time, the display may be a liquid crystal display or an organic electro-luminescence (EL) display.

The IC chip 160 includes a processing unit 161, a storage unit 162, and a communication unit 163.

The processing unit 161 may include, for example, a processing device such as one or a plurality of CPUs. In a case where these blocks include a processing device such as a CPU, such a processing device may include an electronic circuit. The processing unit 161 can be implemented by executing a program by such a processing device.

The communication unit 163 includes a communication circuit, and has a function of communicating with the control unit 120. For example, the communication unit 163 has a function of acquiring data from the control unit 120 and providing data to the other device.

The storage unit 162 includes a memory, and is a recording medium that stores a program executed by the processing unit 161 and stores data necessary for executing the program. Furthermore, the storage unit 162 temporarily stores data for calculation by the processing unit 161. For example, the storage unit 162 includes a semiconductor storage device.

In the above, the functional configuration example has been described of the mobile terminal 10 according to the embodiment of the present disclosure.

### [1.4. Hardware configuration example of reader/writer]

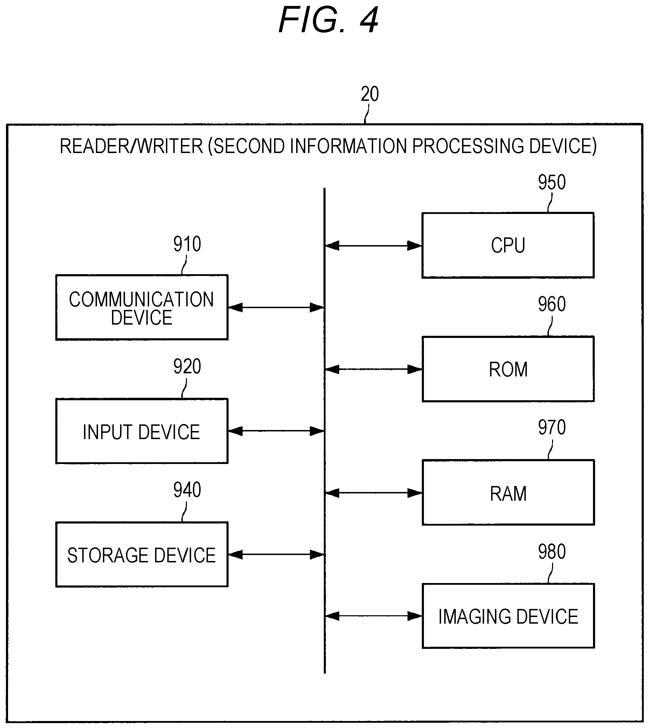

Subsequently, a hardware configuration example will be described of the reader/writer 20 according to the embodiment of the present disclosure. Fig. 4 is a block diagram illustrating a hardware configuration example of the reader/writer 20 according to the present embodiment.

In the example illustrated in Fig. 4, the reader/writer 20 includes a communication device 910, an input device 920, a storage device 940, a Central Processing Unit (CPU) 950, a Read Only Memory (ROM) 960, a Random Access Memory (RAM) 970, and an imaging device 980. Furthermore, the reader/writer 20 also includes a bus, a bridge, an interface, and the like in addition to those illustrated in Fig. 4.

The CPU 950 functions as, for example, an arithmetic processing device or a control device, and controls all or part of operations of each constituent on the basis of various programs recorded on the storage device 940, the ROM 960, the RAM 970, or a removable recording medium (not illustrated).

The ROM 960 stores, for example, a program read by the CPU 950, data used for calculation, and the like. The RAM 970 temporarily or permanently stores, for example, a program read by the CPU 950 and various parameters and the like that change as appropriate when the program is executed.

The storage device 940 is a device for storing various data, and includes, for example, a magnetic storage device such as a hard disk drive (HDD), a semiconductor storage device, an optical storage device, a magneto-optical storage device, or the like.

The communication device 910 transmits and receives radio waves wirelessly to and from the mobile terminal 10, for example.

The input device 920 mainly includes input buttons. Furthermore, the input device 920 may be a remote control means (so-called remote controller) capable of transmitting a control signal using infrared rays or other radio waves. Note that, the input device 920 includes an input control circuit for transmitting information input by using the operation means described above to the CPU 950 as an input signal, and the like.

The imaging device 980 uses various members, such as an imaging element, for example, a Charge Coupled Device (CCD) or a Complementary Metal Oxide Semiconductor (CMOS), and a lens for controlling formation of a subject image on the imaging element, to capture an image of a real space, and generates a captured image. The imaging device 980 may be a device that captures a still image, or may be a device that captures a moving image.

In the above, the hardware configuration example has been described of the reader/writer 20 according to the embodiment of the present disclosure.

### [1.5. Functional configuration example of reader/writer]

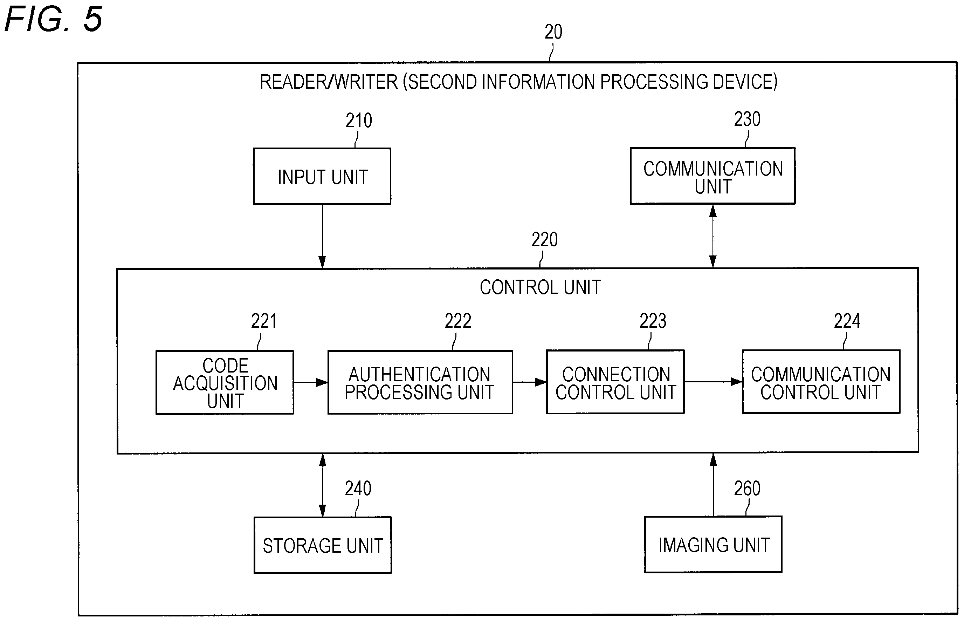

Subsequently, a functional configuration example will be described of the reader/writer 20 according to the embodiment of the present disclosure. Fig. 5 is a diagram illustrating a functional configuration example of the reader/writer 20 according to the embodiment of the present disclosure. As illustrated in Fig. 5, the reader/writer 20 includes an input unit 210, a control unit 220, a communication unit 230, a storage unit 240, and an imaging unit 260.

The input unit 210 has a function of accepting an operation input by a user. In the embodiment of the present disclosure, a case is mainly assumed where the input unit 210 includes a button. However, the input unit 210 may include a touch panel, a mouse, a keyboard, a switch, a lever, or the like. Furthermore, the input unit 210 may include a microphone that detects the user's voice.

The control unit 220 executes control of each unit of the reader/writer 20. Note that, the control unit 220 may include, for example, a Central Processing Unit (CPU), and the like. In a case where the control unit 220 includes a processing device such as a CPU, such a processing device may include an electronic circuit. The control unit 220 can be implemented by executing a program by such a processing device. The control unit 220 includes a code acquisition unit 221, an authentication processing unit 222, a connection control unit 223, and a communication control unit 224. Functions of these units will be described later.

The storage unit 240 includes a memory, and is a recording medium that stores a program executed by the control unit 220 and stores data necessary for executing the program. Furthermore, the storage unit 240 temporarily stores data for calculation by the control unit 220. For example, the storage unit 240 includes a magnetic storage device, a semiconductor storage device, an optical storage device, or a magneto-optical storage device.

The communication unit 230 includes a communication circuit, and has a function of communicating with another device. For example, in a case where a connection with the mobile terminal 10 is established, the communication unit 230 performs P2P wireless communication with the mobile terminal 10 by using a communication path with which the connection is established. For example, the communication unit 230 includes a communication interface.

The imaging unit 260 performs imaging in accordance with control by the control unit 220. Specifically, the imaging unit 260 performs imaging of a subject around the reader/writer 20 in accordance with the control by the control unit 220. For example, the imaging unit 260 performs imaging when receiving an imaging instruction from the control unit 220. Then, the imaging unit 260 provides the control unit 220 with image data obtained by imaging. Note that, the imaging unit 260 can include an imaging optical system such as a focusing imaging lens and a zoom lens, and a signal conversion element such as a Charge Coupled Device (CCD) or a Complementary Metal Oxide Semiconductor (CMOS).

In the above, the functional configuration example has been described of the reader/writer 20 according to the embodiment of the present disclosure.

### [1.6. General connection processing and authentication processing]

Here, a description will be given of connection processing and authentication processing in a case where information necessary for connection between the reader/writer 20 and the mobile terminal 10 (hereinafter also referred to as "P2P connection information") is embedded in a code. Hereinafter, a case will be described where a two-dimensional code is used as the code, as an example; however, the type of the code is not limited to the two-dimensional code. Furthermore, a QR code (registered trademark) can be used as a typical example of the two-dimensional code. Furthermore, the P2P connection information can correspond to an example of "identification information". For example, the P2P connection information may be address information used for communication between the reader/writer 20 and the mobile terminal 10.

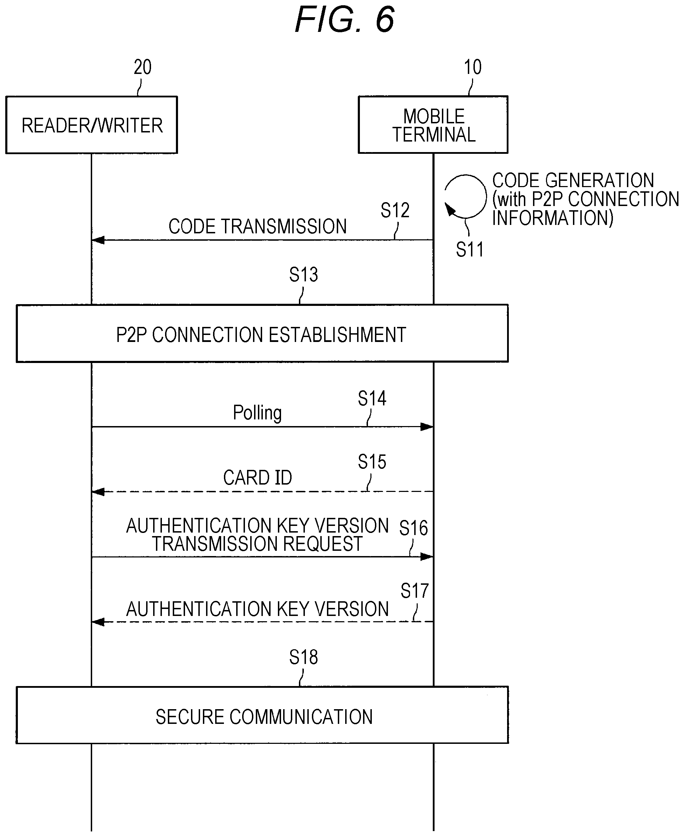

Fig. 6 is a flowchart illustrating a flow of the connection processing and the authentication processing in a case where the P2P connection information is embedded in the code. As illustrated in Fig. 6, in the mobile terminal 10, a two-dimensional code is generated in which P2P connection information is embedded (S11). Then, the mobile terminal 10 transmits the two-dimensional code to the reader/writer 20 (S12). The reader/writer 20 and the mobile terminal 10 establish a connection (establish a P2P connection) on the basis of the P2P connection information (S13).

Subsequently, polling transmission is performed from the reader/writer 20 to the mobile terminal 10, and a card ID is returned from the mobile terminal 10 to the reader/writer 20 as a response to the polling (S15). Then, an authentication key version transmission request is made from the reader/writer 20 to the mobile terminal 10 (S16), and an authentication key version is returned from the mobile terminal 10 to the reader/writer 20 as a response to the authentication key version transmission request (S17).

The reader/writer 20 performs authentication based on the card ID and the authentication key version, and when the authentication is successful, secure communication is started between the reader/writer 20 and the mobile terminal 10 (S18).

In a case where the connection processing and the authentication processing are performed as illustrated in Fig. 6, the P2P connection information is exchanged, and connection establishment based on the P2P connection information is performed, and then information necessary for authentication (for example, card ID, authentication key version, and the like) are exchanged and authentication based on the information necessary for the authentication is performed, so that the timing is delayed of communication start after the connection establishment. Thus, in the present embodiment, a technology will be mainly described that can advance the timing of the communication start after the connection establishment.

Moreover, in a case where a two-dimensional code is used for authentication, the two-dimensional code may be generated in a server to reduce the risk that the two-dimensional code is stolen. In other words, the mobile terminal 10 needs to be connected to the network (needs to be online), but it may be difficult to bring the mobile terminal 10 online, for example, in regions where infrastructure is insufficient. Thus, in the present embodiment, a technology will be described that enables authentication even when the mobile terminal 10 is offline.

In the above, the flow has been described of the connection processing and the authentication processing in the case where the P2P connection information is embedded in the code.

### [1.7. Connection processing and authentication processing according to present embodiment]

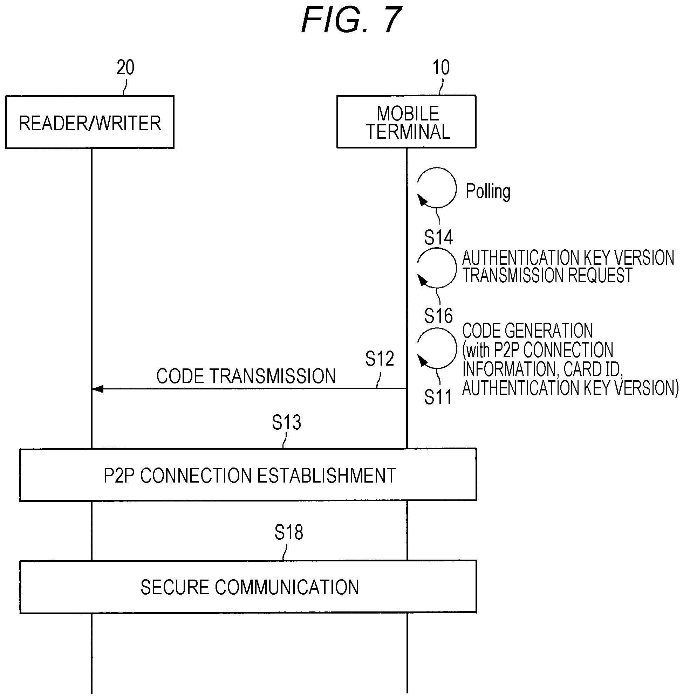

Subsequently, a description will be given of connection processing and authentication processing according to the present embodiment. Fig. 7 is a flowchart illustrating a flow of the connection processing and the authentication processing according to the present embodiment. As illustrated in Fig. 7, inside the mobile terminal 10, polling transmission is performed and a card ID is acquired as a response to the polling (S14), and an authentication key version transmission request is transmitted and an authentication key version is acquired as a response to the authentication key version transmission request.

Subsequently, the mobile terminal 10 generates a two-dimensional code in which not only the P2P connection information but also the card ID and the authentication key version are embedded (S11). Then, the mobile terminal 10 transmits the two-dimensional code to the reader/writer 20 (S12). The reader/writer 20 and the mobile terminal 10 establish a connection (establish a P2P connection) on the basis of the P2P connection information (S13).

In the reader/writer 20, authentication is performed based on the card ID and the authentication key version (part of the information necessary for the authentication), and when the authentication is successful, secure communication is started between the reader/writer 20 and the mobile terminal 10 (S18). Note that, the order relation between the connection establishment based on the P2P connection information and the authentication based on the card ID and the authentication key version is not particularly limited.

In a case where the connection processing and the authentication processing are performed as illustrated in Fig. 7, exchange of the P2P connection information and the information necessary for the authentication (for example, card ID, authentication key version, and the like) is simultaneously performed by using the code. The time for exchanging the information necessary for the authentication is therefore reduced, so that it is possible to advance the timing of the communication start after the connection establishment.

Moreover, in the present embodiment, authentication can be performed even when the mobile terminal 10 is offline.

In the above, the description has been given of the connection processing and the authentication processing according to the present embodiment.

### [1.8. Details of connection processing and authentication processing]

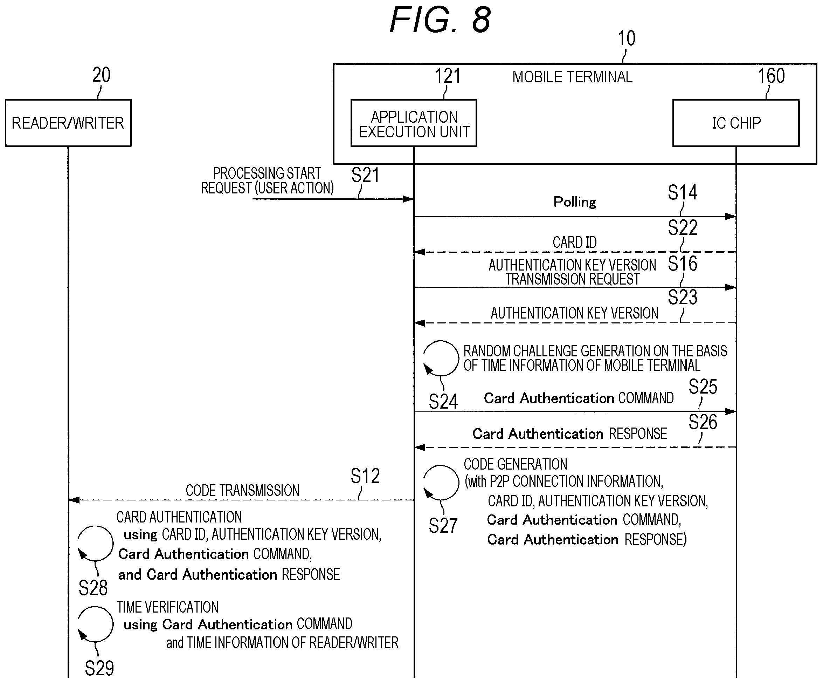

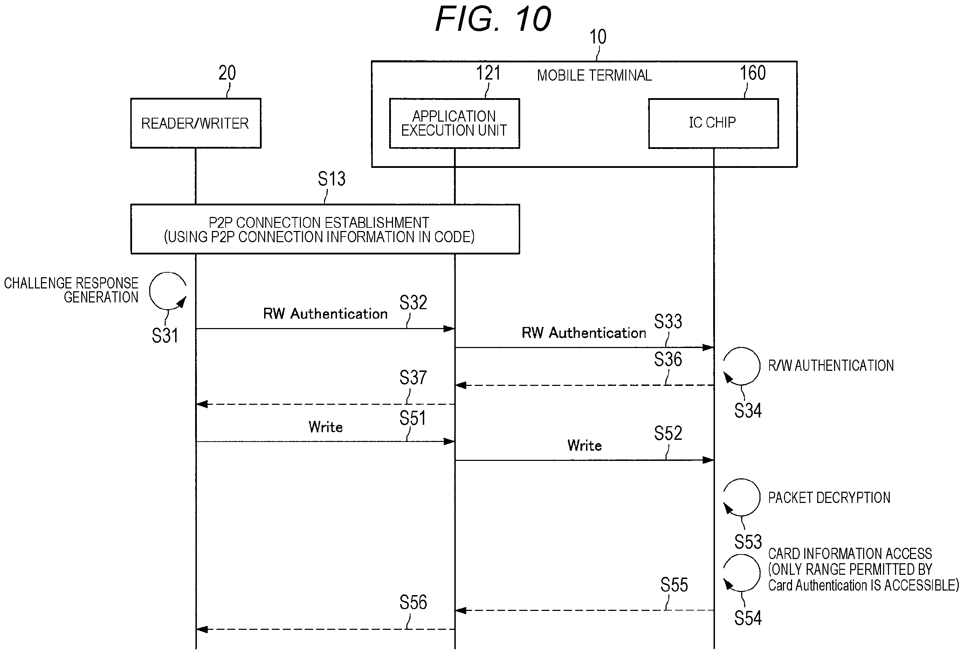

Subsequently, details will be described of the connection processing and the authentication processing according to the present embodiment. Figs. 8 to 10 are flowcharts illustrating the details of the connection processing and the authentication processing according to the present embodiment. As illustrated in Fig. 8, in the mobile terminal 10, when a processing start request is input to the application execution unit 121 by a user action (S21), the application execution unit 121 performs polling transmission to the IC chip 160 (S14). Then, the application execution unit 121 acquires a card ID as a response to the polling (S22).

Subsequently, the application execution unit 121 transmits an authentication key version transmission request to the IC chip 160 (S16). Then, the application execution unit 121 acquires an authentication key version as a response to the authentication key version transmission request (S23).

Subsequently, the application execution unit 121 generates a random challenge (challenge value) on the basis of time information of the mobile terminal 10 (S24). Then, the application execution unit 121 generates a Card Authentication command (authentication command) and transmits the authentication command to the IC chip 160 (S25). The Card Authentication command may include a random challenge generated immediately before, information indicating an area for which access permission is requested during encrypted communication in the storage unit 162 (memory area) of the IC chip 160, and part of session information for encrypted communication.

As a response to the Card Authentication command, the IC chip 160 generates a Card Authentication response (authentication response) based on the random challenge, the card ID, and the authentication key version, and transmits the authentication response to the application execution unit 121 (S26). The Card Authentication response may include a challenge response (response value) for the random challenge, a random challenge (challenge value) for the reader/writer 20, and the part of the session information for the encrypted communication.

Subsequently, in the mobile terminal 10, the code generation unit 122 generates a two-dimensional code in which not only the P2P connection information but also the card ID, the authentication key version, the Card Authentication command, and the Card Authentication response are embedded (S27). Then, in the mobile terminal 10, the display control unit 123 controls display by the display unit 150 of the two-dimensional code. In the reader/writer 20, the two-dimensional code is imaged by the imaging unit 260. As a result, the two-dimensional code is transmitted from the mobile terminal 10 to the reader/writer 20 (S12).

In the reader/writer 20, when the two-dimensional code is acquired by the code acquisition unit 221, the authentication processing unit 222 performs authentication processing. Specifically, the authentication processing unit 222 extracts the P2P connection information, card ID, authentication key version, Card Authentication command, and Card Authentication response from the two-dimensional code, and performs card authentication (part of the authentication) on the basis of the card ID, authentication key version, Card Authentication command, and Card Authentication response (S28).

At this time, the authentication processing unit 222 compares time information in the reader/writer 20 with time information acquired from the random challenge extracted from the Card Authentication command, and obtains a comparison result. The authentication processing unit 222 performs the card authentication (part of the authentication) on the basis of the comparison result and the part of the information necessary for the authentication. More specifically, in a case where the time information in the reader/writer 20 matches the time information acquired from the random challenge, and the card authentication (part of the authentication) based on the part of the information necessary for the authentication is successful, the authentication processing unit 222 shifts the operation to the P2P connection establishment in S13. The communication control unit 224 permits the reader/writer 20 to access the memory area of the storage unit 162. As a result, it is possible to suppress spoofing due to theft of the two-dimensional code.

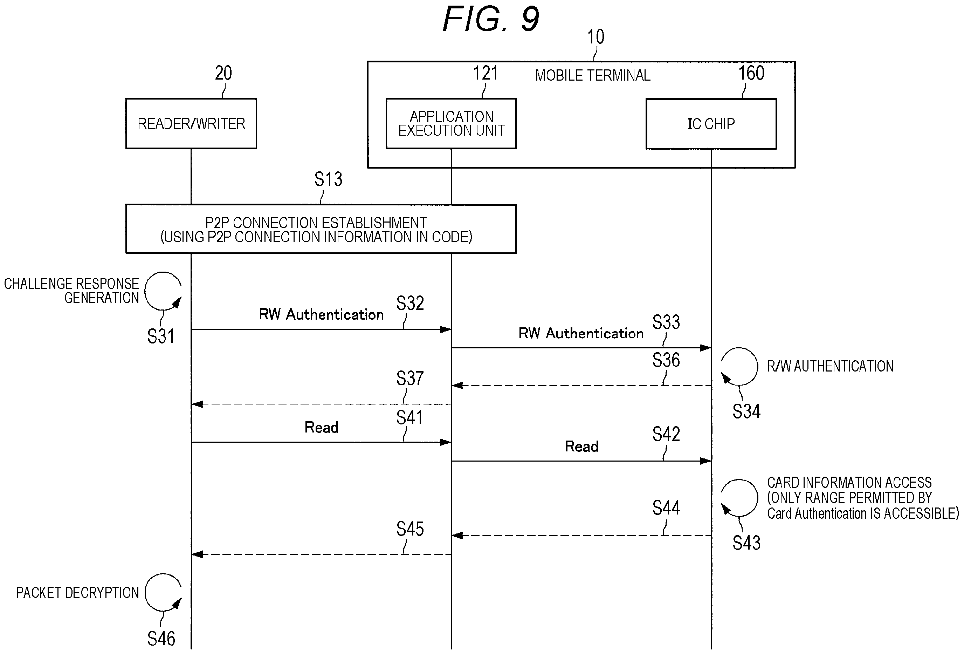

As illustrated in Fig. 9, the connection control unit 223 in the reader/writer 20 and the connection control unit 124 in the mobile terminal 10 establish a P2P connection (establish a connection based on the P2P connection information) (S13). The communication control unit 224 generates a challenge response from the random challenge included in the Card Authentication response (S31), and transmits an RW Authentication command including the generated challenge response to the IC chip 160 via the communication unit 230 and the application execution unit 121 by using the established P2P connection (S32, S33). The IC chip 160 (authentication unit) performs R/W authentication (the rest of the authentication) based on the RW Authentication command

(S34), and returns an authentication result to the reader/writer 20 via the communication unit 130 in the mobile terminal 10 (S36, S37). If the R/W authentication (the rest of the authentication) is successful, the communication control unit 125 permits the reader/writer 20 to access the memory area of the storage unit 162.

At the time of reading data, in the reader/writer 20, the communication control unit 224 transmits a Read command to the IC chip 160 via the communication unit 230 (S41, S42). In the mobile terminal 10, the communication control unit 125 encrypts the data in the area where the reader/writer 20 is permitted to access the memory area of the storage unit 162, by using the session information, and transmits the encrypted data to the reader/writer 20 via the communication unit 130 (S44, S45). In the reader/writer 20, when the data encrypted by the communication unit 230 is received, the data is decrypted by the communication control unit 224 (S46).

At the time of writing data, in the reader/writer 20, the communication control unit 224 encrypts the data by using the session information, and transmits a Write command including the encrypted data to the IC chip 160 via the communication unit 230 (S51, S52). In the mobile terminal 10, the communication control unit 125 decrypts the data encrypted by using the session information (S53), and writes the decrypted data in an area where access to the memory area of the storage unit 162 is permitted (S54). The communication control unit 125 transmits a processing result to the reader/writer 20 via the communication unit 130 (S55, S56).

In the above, the details have been described of the connection processing and the authentication processing according to the present embodiment.

### <2. Conclusion>

As described above, according to the embodiment of the present disclosure, an information processing device is provided including: a code generation unit that generates a code in which part of information necessary for authentication and identification information are embedded; and a display control unit that controls display of the code, in which a connection based on the identification information included in the code is established, and authentication is performed on the basis of the part of the information necessary for the authentication.

According to such a configuration, the time for exchanging the information necessary for the authentication is reduced, so that it is possible to advance the timing of the communication start after the connection establishment. Moreover, according to such a configuration, authentication can be performed even when the information processing device is offline.

In the above, the preferred embodiments of the present disclosure have been described in detail with reference to the accompanying drawings; however, the technical scope of the present disclosure is not limited to such examples. It is obvious that persons having ordinary knowledge in the technical field of the present disclosure can conceive various modification examples or correction examples within the scope of the technical idea described in the claims, and it is understood that the modification examples or correction examples also belong to the technical scope of the present disclosure.

For example, it is also possible to create a program for causing hardware such as a CPU, ROM, and RAM incorporated in a computer to exhibit functions equivalent to the functions of the control unit 120 described above. Furthermore, a computer-readable recording medium that records the program can also be provided. Furthermore, for example, it is also possible to create a program for causing hardware such as a CPU, ROM, and RAM incorporated in a computer to exhibit functions equivalent to the functions of the control unit 220 described above. Furthermore, a computer-readable recording medium that records the program can also be provided.

Furthermore, the effects described in the present specification are merely illustrative or exemplary and not restrictive. That is, the technology according to the present disclosure can exhibit other effects obvious to those skilled in the art from the description of the present specification together with the above-described effects or in place of the above effects.

Note that, the following configurations also belong to the technical scope of the present disclosure.
(1) An information processing device including:
   a code generation unit that generates a code in which part of information necessary for authentication and identification information are embedded;
   a display control unit that controls display of the code; and
   an authentication unit that performs a rest of the authentication by using a connection established, after part of the authentication is performed on the basis of the part of the information necessary for the authentication and the connection based on the identification information included in the code is established.
(2) The information processing device according to (1), in which
   in a case where the part of the authentication based on the part of the information necessary for the authentication is successful and the rest of the authentication is successful, access to a memory area is permitted.
(3) The information processing device according to (1) or (2), in which
   the part of the information necessary for the authentication includes an authentication command.
(4) The information processing device according to (3), in which
   the authentication command includes a challenge value generated on the basis of time information in the information processing device.
(5) The information processing device according to (4), in which
   in the information processing device, the part of the authentication is performed on the basis of a comparison result between time information in a reader that reads the code and time information acquired from the challenge value, and the part of the information necessary for the authentication.
(6) The information processing device according to (5), in which
   in the information processing device, in a case where the time information in the reader that reads the code matches the time information acquired from the challenge value, and the part of the authentication based on the part of the information necessary for the authentication is successful, and the rest of the authentication is successful, access to a memory area is permitted for another information processing device.
(7) The information processing device according to any one of (3) to (6), in which
   the part of the information necessary for the authentication includes an authentication response to the authentication command.
(8) The information processing device according to (7), in which
   the authentication response includes a response value based on a challenge value, a card ID, and an authentication key version.
(9) The information processing device according to any one of (1) to (8), in which
   the part of the information necessary for the authentication includes a card ID.
(10) The information processing device according to any one of (1) to (9), in which
   the part of the information necessary for the authentication includes an authentication key version.
(11) The information processing device according to any one of (1) to (10), in which
   the code is a two-dimensional code.
(12) The information processing device according to any one of (3) to (8), further including
   a communication control unit that permits another information processing device to access a memory area, in a case where the part of the authentication based on the part of the information necessary for the authentication is successful and the rest of the authentication is successful.
(13) The information processing device according to any one of (3) to (8), in which
   the authentication command includes information indicating an area for which access permission is requested in a memory area.
(14) The information processing device according to any one of (1) to (11), in which
   the identification information includes address information used for communication with another information processing device.
(15) An information processing system including:
   a first information processing device including
   a code generation unit that generates a code in which part of information necessary for authentication and identification information are embedded,
   a display control unit that controls display of the code, and
   an authentication unit that performs a rest of the authentication by using a connection established, after part of the authentication is performed on the basis of the part of the information necessary for the authentication and the connection based on the identification information included in the code is established; and
   a second information processing device including
   a code acquisition unit that acquires the code, and
   an authentication processing unit that performs part of the authentication on the basis of the part of the information necessary for the authentication.
(16) A program that causes a computer to function as
   an information processing system including:
   a code generation unit that generates a code in which part of information necessary for authentication and identification information are embedded;
   a display control unit that controls display of the code;
   an authentication unit that performs a rest of the authentication by using a connection established, after part of the authentication is performed on the basis of the part of the information necessary for the authentication and the connection based on the identification information included in the code is established;
   a code acquisition unit that acquires the code; and
   an authentication processing unit that performs part of the authentication on the basis of the part of the information necessary for the authentication.

### REFERENCE SIGNS LIST

- 1: Information processing system
- 10: Mobile terminal
- 110: Input unit
- 120: Control unit
- 121: Application execution unit
- 122: Code generation unit
- 123: Display control unit
- 124: Connection control unit
- 125: Communication control unit
- 130: Communication unit
- 140: Storage unit
- 150: Display unit
- 160: IC chip
- 161: Processing unit
- 162: Storage unit
- 163: Communication unit
- 20: Reader/writer
- 210: Input unit
- 220: Control unit
- 221: Code acquisition unit
- 222: Authentication processing unit
- 223: Connection control unit
- 224: Communication control unit
- 230: Communication unit
- 240: Storage unit
- 260: Imaging unit
- 30: Third Information processing device

## Claims

1. An information processing device comprising:
a code generation unit that generates a code in which part of information necessary for authentication and identification information are embedded;
a display control unit that controls display of the code; and
an authentication unit that performs a rest of the authentication by using a connection established, after part of the authentication is performed on a basis of the part of the information necessary for the authentication and the connection based on the identification information included in the code is established.

2. The information processing device according to claim 1, wherein
in a case where the part of the authentication based on the part of the information necessary for the authentication is successful and the rest of the authentication is successful, access to a memory area is permitted.

3. The information processing device according to claim 1, wherein
the part of the information necessary for the authentication includes an authentication command.

4. The information processing device according to claim 3, wherein
the authentication command includes a challenge value generated on a basis of time information in the information processing device.

5. The information processing device according to claim 4, wherein
in the information processing device, the part of the authentication is performed on a basis of a comparison result between time information in a reader that reads the code and time information acquired from the challenge value, and the part of the information necessary for the authentication.

6. The information processing device according to claim 5, wherein
in the information processing device, in a case where the time information in the reader that reads the code matches the time information acquired from the challenge value, and the part of the authentication based on the part of the information necessary for the authentication is successful, and the rest of the authentication is successful, access to a memory area is permitted for another information processing device.

7. The information processing device according to claim 3, wherein
the part of the information necessary for the authentication includes an authentication response to the authentication command.

8. The information processing device according to claim 7, wherein
the authentication response includes a response value based on a challenge value, a card ID, and an authentication key version.

9. The information processing device according to claim 1, wherein
the part of the information necessary for the authentication includes a card ID.

10. The information processing device according to claim 1, wherein
the part of the information necessary for the authentication includes an authentication key version.

11. The information processing device according to claim 1, wherein the code is a two-dimensional code.

12. The information processing device according to claim 3, further comprising
a communication control unit that permits another information processing device to access a memory area, in a case where the part of the authentication based on the part of the information necessary for the authentication is successful and the rest of the authentication is successful.

13. The information processing device according to claim 3, wherein
the authentication command includes information indicating an area for which access permission is requested in a memory area.

14. The information processing device according to claim 1, wherein
the identification information includes address information used for communication with another information processing device.

15. An information processing system comprising:
a first information processing device including
a code generation unit that generates a code in which part of information necessary for authentication and identification information are embedded,
a display control unit that controls display of the code, and
an authentication unit that performs a rest of the authentication by using a connection established, after part of the authentication is performed on a basis of the part of the information necessary for the authentication and the connection based on the identification information included in the code is established; and
a second information processing device including
a code acquisition unit that acquires the code, and
an authentication processing unit that performs part of the authentication on a basis of the part of the information necessary for the authentication.

16. A program that causes a computer to function as an information processing system including:
a code generation unit that generates a code in which part of information necessary for authentication and identification information are embedded;
a display control unit that controls display of the code;
an authentication unit that performs a rest of the authentication by using a connection established, after part of the authentication is performed on a basis of the part of the information necessary for the authentication and the connection based on the identification information included in the code is established;
a code acquisition unit that acquires the code; and
an authentication processing unit that performs part of the authentication on a basis of the part of the information necessary for the authentication.
